# EUROPEAN PATENT APPLICATION

(11) **EP 4 521 823 A1**
(43) Date of publication of application: **12.03.2025**
(21) Application number: 24195135.9
(22) Date of filing: 19.08.2024
(51) Int. Cl.: H04W 36/06, H04W 84/12, H04W 36/00

(54) **SYSTEM FOR AND METHODS OF USING LINK-SWITCH PROTOCOLS AND/OR OVERLAPPING TRAFFIC DETECTION**

(30) Priority: 22.08.2023 IN 202321056178; 31.01.2024 US 202418428796
(71) Applicant: Avago Technologies International Sales Pte. Limited, Singapore 768923 (SG)
(72) Inventor: Puducheri Sundaravaradhan, Srinath, Irvine, 92618 (US); Fischer, Matthew, Irvine, 92618 (US); Verma, Sindhu, Irvine, 92618 (US); Adhikari, Shubhodeep, Irvine, 92618 (US); Kondylis, George, Irvine, 92618 (US); Su, Hang, Irvine, 92618 (US); Patel, Manish, Irvine, 92618 (US)
(74) Representative: Bosch Jehle Patentanwaltsgesellschaft mbH

(57) **Abstract**

A wireless device can include a first radio configured to transmit over a first link and a second link of a first wireless band. The first radio can be configured to detect an OBSS communication on the first link of the first wireless band. The wireless device can perform coordinated link-switch (CLS) operations. The wireless device can be configured to operate as an access point (AP) for one or more stations of a wireless network or a station.

## Description

This application claims the benefit of and priority to Indian Provisional Application No. 202321056178, filed August 22, 2023, the entire disclosure of which is incorporated by reference herein.

This disclosure generally relates to systems and methods for communication between a station (STA) and access point (AP) or between other communication devices.

In the last few decades, the market for wireless communications devices has grown by orders of magnitude, fueled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.11x, Bluetooth, global system for mobile communications (GSM), code division multiple access (CDMA). As higher data throughput, density of networks, and other changes develop, newer standards are constantly being developed for adoption, such as a progression from IEEE 802.11n to IEEE 802.11ac, ax, or be. Network devices can operate as a client stations (STAs), access points (APs), or mobile APs.

IEEE 802.11be defines an EMLSR (Enhanced Multi-Link Single-Radio) feature for non-AP STAs. This application incorporates by reference in its entirety U. S. Patent Application Serial No. 18/307,438 which discloses EMLSR features.

According to an aspect, a first device is provided, comprising:
a circuit configured to provide frames across a connection comprised of one or more links to a second device, the first device and the second device being access points, wherein the circuit is configured to provide a transmit opportunity duration on a first link and an opportunity for the second device to switch to a second link.

Advantageously, the circuit is configured to perform one or more of: 1. keep the first device on the first link if the second device services clients that support link switch while the first device services clients that do not support link switch; 2. switch the first device to the second link if a clear channel assessment status of the first device indicates that the second link is idle/unoccupied and the clear channel assessment status of the second device indicates that the second link is busy; or 3. switch the first device to the second link if the first device anticipates a larger improvement in quality of service for the first device by switching to the second link than the second device.

Advantageously, the circuit is configured to transmit a trigger on the second link after the first device has switched to the second link, the trigger being addressed to at least one client device with listen-only capability on the second link, and the trigger causing the at least one client device to switch to full receive and transmit capability on the second link.

Advantageously, the circuit is configured to provide frames across a connection to a third device, wherein the circuit is configured to detect a first frame on the first link from an overlapping basic service set and determine a second transmit opportunity duration for the overlapping basic service set, wherein the circuit is configured to switch the first device to the second link or a third link if a received-signal-strength of the first frame exceeds a first threshold and the second transmit opportunity duration exceeds a second threshold.

Advantageously, the frames are provided according to an 802.11 protocol.

Advantageously, the circuit is configured to receive a second frame from the third device or to transmit a third frame to the third device, on the second link or third link, during the second transmit opportunity duration.

Advantageously, the circuit is configured to switch the first device back to the first link no later than expiry of the second transmit opportunity duration.

Advantageously, the second device is configured to operate on the first link according to a rule associated with the transmit opportunity duration.

Advantageously, the first device and the second device are configured to operate on the first link for a backhaul phase and one of the first device or the second device is configured to operate on the second link during a fronthaul phase.

According to an aspect, a first device is provided, comprising:
a circuit configured to provide frames across a connection comprised of one or more links to a second device, wherein the circuit is configured to detect a first frame on a first link from an overlapping basic service set and determine a first duration of a transmit opportunity for the overlapping basic service set, wherein the circuit is configured to perform one or more of: 1. switch the first device to a second link and the first device remains on the second link until expiry of the duration minus a time for completion of a link-switch operation from second link to the first link; 2. switch the first device to the second link and the first device remains on the second link until expiration of a second duration if a new frame addressed to the first device or a clear to send frame addressed to the second device is received within a third duration; 3. switch the first device back to the first link after switching to the second link if the second link is continuously busy/unavailable for a fourth duration; 4. switch the first device back to the first link after switching to the second link if the second device notifies the first device to switch back to the first link prior to the expiry of the first duration; or 5. switch the first device to a second link if a measured received-signal-strength (RSSI) of the first frame exceeds a first threshold and the first duration exceeds a second threshold.

Advantageously, the second device is an access point.

Advantageously, the first frame is detected as being from an overlapping service set using a setting in a physical layer preamble.

Advantageously, the first device is an access point and the setting is a number of splits, a modulation coding scheme or a bandwidth or physical-layer version setting that is not supported by the first device.

Advantageously, the first device is an access point and the first frame is detected as being from an overlapping service set in response to data in an uplink/ downlink field.

Advantageously, the frames are provided according to an 802.11 protocol.

According to an aspect, a first device is provided, comprising:
a circuit configured to provide frames across a connection comprised of one or more links to a second device and a third device, the first device being an access point and the second device and the third device being client devices, wherein the circuit is configured to initiate a frame sequence upon gaining access to a medium on a first link, the frame sequence providing a transmit opportunity duration, wherein the circuit is configured to switch the first device to a second link following the frame sequence and switch the first device back to the first link no later than expiry of the transmit opportunity duration.

Advantageously, the frame sequence notifies the second device to move to the second link, while the third device remains on the first link and does not attempt to communicate with the AP on the first link during the transmit opportunity duration.

Advantageously, the circuit is configured to transmit a trigger on the second link addressed to at least one client device with listen-only capability on the second link, wherein the trigger causes the at least one client device with listen-only capability to switch over to full receive and transmit capability on the second link.

Advantageously, a fourth device is an access point and the first device is configured to receive a notification from the fourth device for the first device to switch to the second link, and the fourth device remains on the first link.

Advantageously, a fourth device is an access point and the first device is configured to provide a notification to the fourth device for the first device to switch to the second link, and the fourth device remains on the first link and the notification allows the fourth device to utilize the first link for a duration not exceeding or exactly matching the transmit opportunity duration.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGS. 1B and 1C are block diagrams depicting computing devices useful in connection with the methods and systems described herein, according to some embodiments.
FIG. 2 illustrates a wireless network, according to some embodiments.
FIG. 3 is a general block diagram of an AP or STA for the network illustrated in FIG. 2, according to some embodiments.
FIG. 4 is a sequence diagram for communication using a first CLS protocol, according to some embodiments.
FIG. 5 is a sequence diagram for communication using a second CLS protocol, according to some embodiments.
FIG. 6 is a sequence diagram for communication using a third CLS protocol, according to some embodiments.
FIG. 7 is a sequence diagram for communication using a fourth CLS protocol, according to some embodiments.
FIG. 8 is a sequence diagram for communication using a fifth CLS protocol, according to some embodiments.
FIG. 9 is a sequence diagram for communication using the first or fifth CLS protocol in a residential mesh network, according to some embodiments.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11be^{™}, IEEE 802.11bn^{™}, IEEE 802.11g^{™}, IEEE P802.11n^{™}; and IEEE P802.11ac^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of link-switching protocols and methods and devices using such protocols.

Various client devices can operate as station (STA) devices employing multilink operations using one or more radios (e.g., multiple-link-single-radio (MLSR)). For example, the client devices can employ MLSR radios for each of various bands (e.g., a 2.4GHz band, a 5GHz band, or a 6GHz band). Various STA devices can operate as APs or non-APs. A non-AP device is often a client to an AP device. In some cases, a non-AP device can be configured as a mobile AP or a portable hotspot in which case it can support other non-AP devices as its clients. An AP/mobile AP and its client(s) can communicate using multi-link operation using one or more radios over multiple links. A mobile AP can be a non-simultaneous transmit-receive (NSTR) device over a pair of links as already defined in the 802.11 standards. Further, an AP or a mobile AP can be an EMLSR device over a pair of links as discussed in U. S. Patent Application Serial No. 18/307,438. An EMLSR AP/mobile AP communicates using EMLSR operation over multiple links with its clients. U. S. Patent Application Serial No. 18/307,438 discloses an EMLSR AP/mobile AP that switches links without coordination support from another EMLSR AP/mobile AP. In some embodiments, multiple EMLSR APs can advantageously coordinate their link-switches. Two such client devices can communicate via non simultaneous transmit and receive (NSTR) links on one or more links. For example, the two clients can operate between 2.4 GHz, 5 GHz, and 6 GHz links. The various devices can coordinate a link selection between a primary and non-primary link according to implicit or explicit methods. For example, a single radio can be associated with one or more links such that the single radio can communicate over a selected link and avoid interference over an unselected link.

A network can include arbitration mechanisms or other methods to determine a transmit opportunity (TXOP) within a subnetwork, such as a basic service set (BSS) of devices including client devices (e.g., STAs) which can communicate via an access point (e.g., an AP or mobile AP). However, some networks can include overlapping BSS (OBSS). For example, some networks can include overlapping BSS of a same extended service set (e.g., sharing an SSID) or of different service sets. Some network devices of a BSS.can cause interference with one or more OBSS. Wireless devices can conduct a clear channel assessment (CCA) prior to a transmission to avoid interfering with other devices. For example, a wireless device can employ preamble detection (PD) to detect a message of an OBSS (OBSS-PD). Each radio can include a primary link, and at least one non-primary link (e.g., a secondary link). The primary link can carry beacon/probe response frames, data frames, and other communications. Responsive to an OBSS-PD, or an OBSS-PD exceeding a threshold, the wireless device can communicate over the non-primary link.

In some embodiments, an enhanced multi-link single-radio (EMLSR) operation can involve a STA associated to a multi-link AP (e.g., an AP operating simultaneously on two or more different links/channels). The STA can be configured to dynamically switch between the links on a per-TXOP (transmit opportunity) basis when communicating with the AP. For a nextgeneration 802.11 standard, an extension of the EMLSR feature to APs ("EMLSR-AP") involves both AP and its associated STAs dynamically switching their operating link from one channel-frequency to another on a per-TXOP basis (e.g., a link-switch operation). The feature is used by APs that are capable of full (peak modulation coding scheme (MCS)/ number of spatial streams (Nss)/bandwidth) Tx/Rx operation on only one link at a time (e.g., having only a single fully capable radio). An EMLSR-AP can operate according to protocols (e.g., implicit link-switch (ILS) protocols) for autonomous/un-coordinated switching across the AP and STAs based on OBSS detection.

In some embodiments, enhancements to implicit link-switch (ILS) protocols are provided. The enhancements can include but are not limited to additional rules for OBSS detection and threshold-based criteria for link-switch (e.g., implicit link-switch) operations. In some embodiments, systems and methods are directed to coordinated link-switch (CLS) operations among devices of the same BSS or of different BSS sharing the same primary link, medium-access protocol after link-switch operations, CLS use-cases for mesh networks and dual-band AP operations. A CLS operation may refer to a link-switch operation that uses additional data to accomplish a link-switch operation in some embodiments. The CLS operation may achieve higher throughput, greater robustness, and more coordination than an uncoordinated ILS operation in some embodiments. According to some embodiments, link-switch protocols for EMLSR-AP operation allow an AP (e.g., a mobile AP) or STA to explicitly arbitrate an operational link over a control channel.

In some embodiments, the systems and methods are used in a WiFi environment where both AP and its clients switch dynamically on a TXOP basis across two different links. In some embodiments, an AP supporting EMLSR can operate (i.e., Tx/Rx) on one of two links at any given time. In some embodiments, the two links include: 1. Primary link: used by the AP to transmit periodic beacons, support association/disassociation of clients, and service clients that do not support link-switch operations (such clients remain on the primary link at all times when communicating with the AP) in some embodiments; and 2. Non-primary link: used opportunistically by the AP to service clients that support link-switching (each link is located on a different channel-frequency). In some embodiments, more than two links are used.

In some embodiments, an AP that supports CLS protocols may switch between the primary and non-primary links on a per-TXOP basis, along with a subset of its associated clients/STAs. In some embodiments, systems and methods as described herein are implemented in 802.11 AP and non-AP STA chips or integrated circuits ICs disposed in a package.

A TXOP may refer to a time interval for transmission on a medium in some embodiments (e.g., a bounded interval in which stations supporting QoS are permitted to transfer a series of frames). In some embodiments, a TXOP constitutes a time period for a sequence of frames exchanged between the AP and one or more of its clients, separated by idle-times equal to one short-interframe-spacing (SIFS). Example TXOPs are provided below for an environment including an AP with three associated STAs, where STA1 and STA2 support EMLSR linkswitch operations, while STA3 does not.
1. TXOP 1 (5ms): AP transmits data to STA1 on primary link;
2. TXOP 2 (5ms): AP and STA2 switch to non-primary link, AP transmits data to STA2 on non-primary, and both devices switch back to primary link at the end of the TXOP;
3. TXOP 3 (3ms): AP transmits data to STA3 on primary link;
4. TXOP 4 (4ms): AP and STA1 switch to non-primary link, STA1 transmits data to AP on non-primary, and both devices switch back to primary link at the end of the TXOP;

The TXOPs are separated in time by a short duration (e.g., in the order of 100us) composed primarily of SIFS and backoff delay in some embodiments.

In some embodiments, systems and methods for ILS, CLS, and OBSS detection operations are provided. The protocols for such operations can include five CLS protocols, a non-primary medium-access after link-switch protocol, CLS for residential mesh networks protocol, and CLS protocol for dual-band APs.

In some embodiments, each of the AP or STA can detect an OBSS communication on the primary link and may convey the information regarding the OBSS communication over the control link/channel if such a control/link channel exists. For example, the AP or STA can convey a time, size, duration, sending unit, receiving unit, energy, or the like. Each of the AP or STA can aggregate their own detected OBSS communications with detected OBSS communications of a corresponding device. Each of the AP or STA can thereafter transmit according to a logical AND of the availability of a link with respect to both of the AP and STA. For example, if a primary link is available to a transmitter-receiver pair, the AP and STA communicate via the primary link. If the primary link is unavailable and a non-primary link is available for the transmitter-receiver pair, the AP and STA can communicate via the non-primary link. If the primary link and any non-primary link are unavailable for the transmitter-receiver pair, the AP or STA can delay the transmission, transmit over a different band, adjust a link, etc. The control channel/link can include a wired or wireless connection. For example, the control channel/link can include a 2.4GHz link or a 900 MHz link.

According to some embodiments, an AP (e.g., a mobile AP) or STA can implicitly arbitrate an operational link. An AP (e.g., a mobile AP) or STA can detect a same or different OBSS communication. For example, a location, position, OBSS-PD threshold or the like can cause one wireless device to determine that a primary link is unavailable, and the wireless device can transition to a secondary link. Upon a mutual detection of a same OBSS transmission, the corresponding wireless devices can communicate over a non-primary link. A non-mutual detection of an OBSS transmission can cause link selection differences between sending and receiving devices. For example, one of a transmitter-receiver pair can detect an OBSS communication and another of the transmitter-receiver pair may not detect the OBSS communication, or each of a transmitter-receiver pair can detect different OBSS communications. An AP or STA can precede a transmission with a CCA or a ready-to-send (RTS) clear-to-send (CTS) exchange. For example, a transmitting unit can convey an RTS message indicating a readiness to send frames. Upon receipt of the RTS, the receiving unit can convey a CTS message. Upon a non-receipt of a CTS within a predetermined amount of time, the transmitter can determine that the receiver or the channel is unavailable, and schedule a retransmission for a later time, another link, another band, etc.

In some embodiments, each link of the first wireless band is a wireless link equal to or greater than 20 MHz in the 5 GHz range. Each link of the second wireless band can be equal to or greater than 20 MHz in the 6 GHz range.

Some embodiments relate to a first device. The first device includes a circuit configured to provide frames across a connection including one or more links to a second device. The circuit is configured to detect a first frame on a first link from an overlapping basic service set and determine a duration of a transmit opportunity for the overlapping basic service set. The circuit is configured to switch to a second link if a measured received-signal-strength (RSSI) of the first frame exceeds a first threshold and the duration exceeds a second threshold.

An overlapping basic service set may refer to an access point and its associated device(s) that have coverage area that intersect with another service set in some embodiments. Examples of an overlapping basic service set (OBBS) are described in the 802.11 standards. Received signal strength may refer to a metric used in wireless communications to measure the power level of the signal received by a receiver (e.g., a Wi-Fi access point or a wireless device) in some embodiments. Received-signal-strength is an indication of how strong or weak a received radio signal is in some embodiments. A transmit opportunity may refer to a time slot or period during which a wireless device has the opportunity to transmit data. In wireless networks, the transmission of data can be regulated by protocols such as carrier sense multiple access with collision avoidance (CSMA/CA). CSMA/CA involves sensing the medium before transmitting to avoid collisions. When the medium is clear, a device has a transmit opportunity to send its data. Examples of transmit opportunities are described in the 802.11 standards.

In some embodiments, the frames are provided according to an 802.11 protocol and the connection is established by using an association or authentication operation. In some embodiments, the circuit is configured to receive a second frame from a second device on the second link during the duration. In some embodiments, the circuit is configured to switch to the first link after the duration. In some embodiments, the circuit is configured to use an enhanced multi-link single-radio to communicate on the first link or the second link. In some embodiments, the first device and the second device are each one of station devices or access points. In some embodiments, the first link is a primary link and the second link is a non-primary link. In some embodiments, at least one of the first and second links uses the 2.4 GHz frequency band or 5 GHZ frequency band.

Some embodiments relate to a first device. The first device includes a circuit configured to provide multilink operations across a connection to a second device. The circuit is configured to provide frames across a connection including one or more links to a second device. The circuit is configured to detect a first frame on a first link from an overlapping basic service set and determine a first duration of a transmit opportunity for the overlapping basic service set. The circuit is configured to: 1. switch to a second link and the first device remains on the second link until the expiry of the duration minus the time for completion of a link-switch operation from second link to the first link; 2. to switch to the second link and the first device remains on the second link until expiration of a second duration if a new frame addressed to the first device or a clear to send frame addressed to the second device is received within a second duration; 3. switch back to the primary link if the second link is continuously busy/unavailable for an amount of time,; or 4. switch back to the primary link after switching to the second link if the second device notifies the first device to switch back to the primary link prior to the expiry of the first duration. A link-switch operation may refer to changing to a different link for communication purposes in some embodiments. A clear to send frame may refer to a frame sent to avoid collisions in a shared communication medium in some embodiments. Examples of a link-switch operation and clear to send (CTS) mechanism are described in the 802.11 standards.

In some embodiments, the second device is an access point. In some embodiments The circuit is configured to: 1. switch to a second link and the first device remains on the second link until the expiry of the duration minus the time for completion of a link-switch operation from second link to the first link; 2. to switch to the second link and the first device remains on the second link until expiration of a second duration if a new frame addressed to the first device or a clear to send frame addressed to the second device is received within a second duration; 3. switch back to the primary link if the second link is continuously busy/unavailable for an amount of time,; and 4.switch back to the primary link after switching to the second link if the second device notifies the first device to switch back to the primary link prior to the expiry of the first duration.link-switch

In some embodiments, the circuit is configured to switch to a second link if a measured received-signal-strength (RSSI) of the first frame exceeds a first threshold and the duration exceeds a second threshold. In some embodiments, the first device is an access point. In some embodiments, the first frame is detected as being from an overlapping service set using a setting in the physical layer preamble. In some embodiments, the setting is a number of splits or modulation coding scheme setting that is not supported by the first device. In some embodiments, the circuit is configured to: 1. keep the first device on the first link if the second device services clients that support link switch while the first device services clients that do not support link switch; 2. switch the first device to the second link if a clear channel assessment status of the first device indicates that the second link is idle/unoccupied and the clear channel assessment status of the second device indicates that the second link is busy; or 3. switch the first device to the second link if the first device anticipates a larger improvement in quality of service for the first device by switching to the second link than the second device .

A modulation and encoding scheme setting may refer to an indication of how data is modulated and/or encoded in some embodiments. A number of splits may refer to the number of spatial streams or links for a connection in some embodiments. Examples of a spatial stream protocols and modulations and encoding schemes are described in the 802.11 standards.

In some embodiments, the first device is an access point and the first frame is detected as being from an overlapping service set in response to data in an uplink/ downlink field. An uplink/downlink field may refer to a portion of a frame that indicates the direction a frame is communicated (e.g., whether the frame is provided from an access point to a station or from a station to an access point) in some embodiments. Examples of uplink/downlink fields are described in the 802.11 standards.

Some embodiments relate to a circuit configured to provide frames across a connection including one or more links to a second device. The first device and the second device are access points. The circuit is configured to provide a transmit opportunity duration for the first device on a first link and an opportunity for the second device to switch to a second link.

In some embodiments, the circuit is configured to: keep the first device on the first link if the second device services clients that support link-switch operations while first device services clients that do not support link-switch operations. Support link-switch operations may refer to a capability of a device to perform a link-switch operation in some embodiments. The link-switch operation can be performed according to protocols discussed below. Idle/unoccupied may refer to a condition of a link being available for communication in some embodiments. Clear channel assessment status may refer to data in a frame indicating a link is idle/unoccupied or busy. Examples of clear channel assessment mechanisms are described in the 802.11 standards.

In some embodiments, the circuit is configured to: switch the first device to the second link if the first device anticipates a larger improvement in quality of service for the first device by switching to the second link than the second device. Quality of service may refer the level of quality for connection in the form of performance metrics in some embodiments.

In some embodiments, the circuit is configured to transmit a trigger on the second link addressed to at least one client device with listen-only capability on the second link. The trigger is for causing the client device to switch to receive and transmit capability. A trigger may refer to a message or frame for causing an action in some embodiments. A listen only capability may refer to a capability to receive and not transmit in some embodiments.

Some embodiments relate to a first device that includes a circuit configured to provide frames across a connection comprised of one or more links to a second device and a third device. The first device is an access point and the second device and the third device are client devices. The circuit is configured to initiate a frame sequence upon gaining access to a medium on a first link. The frame sequence provides a transmit opportunity duration and notifies the second device and the third device to move to the a second link. The circuit is configured to switch the first device back to the first link no later than expiry of the transmit opportunity duration.

The circuit is configured to transmit a trigger on the second link addressed to at least one client device with listen-only capability on the second link. The trigger causes the at least one client device with listen-only capability to switch over to full receive and transmit capability on the second link.

In some embodiments, a fourth device is an access point. The first device is configured to receive a notification from the fourth device for the first device to switch to the second link, and the fourth device remains on the first link. In some embodiments, a fourth device is an access point and the first device is configured to provide a notification to the fourth device for the first device to switch to the second link. The fourth device remains on the first link and the notification allows the fourth device to utilize the first link for a duration not exceeding or exactly matching the transmit opportunity duration.

Some embodiments relate to a first device. The first device includes a circuit configured to provide frames across a connection comprised of one or more links to a second device. The circuit is configured to detect a first frame on a first link from an overlapping basic service set and determine a first duration of a transmit opportunity for the overlapping basic service set. The circuit is configured to perform one or more of: 1. switch the first device to a second link and the first device remains on the second link until expiry of the duration minus a time for completion of a link-switch operation from second link to the first link; 2. switch the first device to the second link and the first device remains on the second link until expiration of a second duration if a new frame addressed to the first device or a clear to send frame addressed to the second device is received within a third duration; 3. switch the first device back to the first link after switching to the second link if the second link is continuously busy/unavailable for a fourth duration; 4. switch the first device back to the first link after switching to the second link if the second device notifies the first device to switch back to the first link prior to the expiry of the first duration; or 5. switch the first device to a second link if a measured received-signal-strength (RSSI) of the first frame exceeds a first threshold and the first duration exceeds a second threshold.

In some embodiments, the circuit is configured to provide frames across a connection to a third device. The circuit is configured to detect a first frame on the first link from an overlapping basic service set and determine a second transmit opportunity duration for the overlapping basic service set. The circuit is configured to switch the first device to the second link or a third link if a received-signal-strength of the first frame exceeds a first threshold and the second transmit opportunity duration exceeds a second threshold.

In some embodiments, the frames are provided according to an 802.11 protocol. In some embodiments, the circuit is configured to receive a second frame from the third device or to transmit a third frame to the third device, on the second link or third link, during the second transmit opportunity duration. In some embodiments, the circuit is configured to switch the first device back to the first link no later than expiry of the second transmit opportunity duration

Some embodiments relate to a first device. The first device includes a circuit configured to provide frames across a connection comprised of one or more links to a second device and a third device. The first device is an access point, and the second device and the third device are client devices. The circuit is configured to initiate a frame sequence upon gaining access to a medium on a first link. The frame sequence provides a transmit opportunity duration, and the circuit is configured to switch the first device to a second link following the frame sequence and switch the first device back to the first link no later than expiry of the transmit opportunity duration.

Some embodiments relate to a first device. The first device includes a circuit configured to provide frames across a connection comprised of one or more links to a second device. The circuit is configured to detect a first frame on a first link from an overlapping basic service set and determine a first duration of a transmit opportunity for the overlapping basic service set. The circuit is configured to perform one or more of 1. switch the first device to a second link and the first device remains on the second link until expiry of the duration minus a time for completion of a link-switch operation from second link to the first link; 2. switch the first device to the second link and the first device remains on the second link until expiration of a second duration if a new frame addressed to the first device or a clear to send frame addressed to the second device is received within a third duration; 3. switch the first device back to the first link after switching to the second link if the second link is continuously busy/unavailable for a fourth duration; 4. switch the first device back to the first link after switching to the second link if the second device notifies the first device to switch back to the first link prior to the expiry of the first duration; or 5. switch the first device to a second link if a measured received-signal-strength (RSSI) of the first frame exceeds a first threshold and the first duration exceeds a second threshold.

### A. Computing and Network Environment

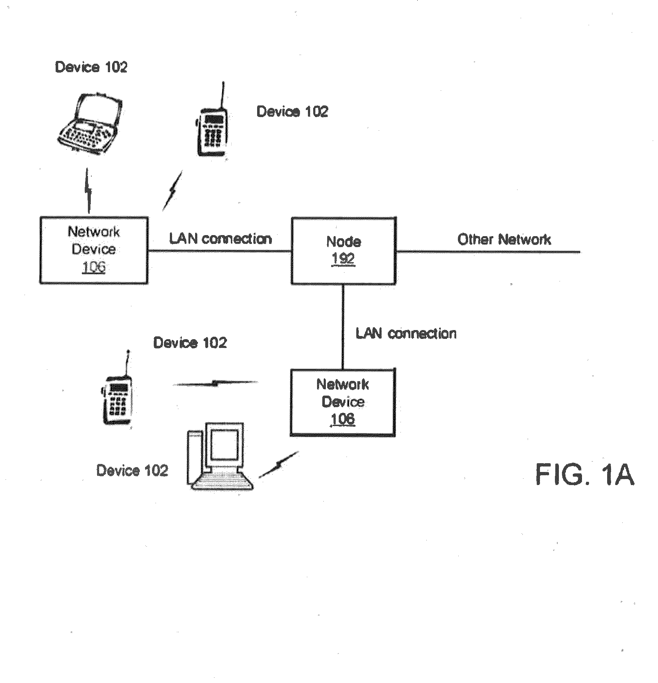

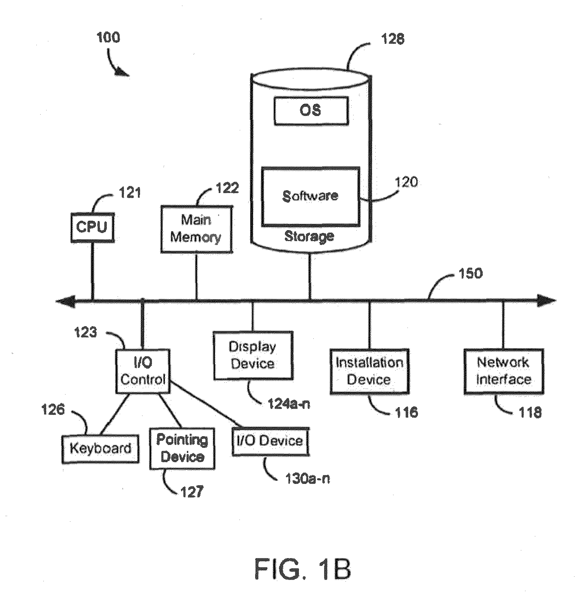

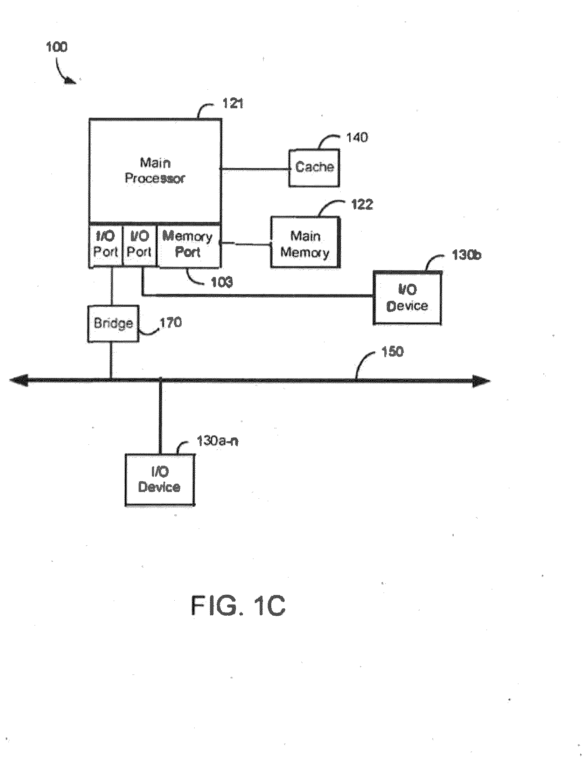

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect-to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing, (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.1 1b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Station and AP Communication

Disclosed herein are systems and a methods of enhanced multilink single radio operation. For example, an AP (e.g., a mobile AP) can employ a radio which transmits or receives frames for two or more links. The multi-link radio can alternate between one or more links to increase performance relative to single link operation. For example, a same radio can be associated with a primary and secondary link such that the radio can alternate between communicating over the links in response to network or device availability. The secondary link may be referred to as a non-primary link. Such a device can limit crosstalk between radios, relative to simultaneous transmit/receive devices. According to some embodiments, the radio can send or receive control channel/link communications to coordinate an active link of the primary or secondary link. According to some embodiments, the radio can determine a primary or secondary link based on detected messages or behavior of other network nodes via a CLS operation. In some embodiments, the systems and methods can be used with devices that have one fully capable radio which alternates between two links for the purpose of transmission/reception. In some embodiments, the systems and methods can be used with devices that additionally have one lower capability scan radio which aids the assessment of channel availability. In some embodiments, access points can each use a second link where the second link of a first access point is different from the second link of a second access point (e.g., the second links may occupy different channel frequencies, may partially overlap in frequency, may be of different bandwidths).

A STA may refer to any device for communicating in communication system and includes but is not limited to a fixed, portable, or mobile laptop, desktop personal computer, personal digital assistant, access point, work station, wearable device, smart phone, or Wi-Fi phone in some embodiments. An access point (AP) may refer to a device for communicatively coupling one or more non-AP devices (e.g., a client or client device) to a network in some embodiments. More specifically, an AP may enable non-AP devices to connect and communicate with a network. In some embodiments, an AP may be a wireless access point (WAP) configured to enable wireless communication between non-AP devices. An AP includes but is not limited to a mobile, portable, or fixed hot spot, router, bridge, or other communication device.

A radio may refer to a device to wirelessly communicate data, in some embodiments. A band may refer to a predefined portion of wireless spectrum, in some embodiments. For example, a wireless band can include contiguous spectrum according to as standard such as 5030-5990 MHz, 5945-7125 MHz, 2401-2495 MHz, or the like. A link may refer to a subdivision of a band for wireless communication between radios or another channel for communication such as a wired link for communication (e.g., Ethernet). The link can include a frequency subdivision, time-subdivision, combination thereof, or the like. A multiple-link-single-radio (MLSR) may refer to a radio configured to selectively operate over at least two links (e.g., two links of at least one band). For example, the MLSR radio can operate over the links responsive to wireless spectrum congestion, or to increase throughput by alternating transmissions or receptions therebetween. For example, an MLSR may operate over a primary link, a secondary link, and so on. A primary link may refer to a default, initial, or first link available to a device, such as a device including an MLSR radio in some embodiments. A secondary link may refer to a non-default, alternate, or second link available to a device, such as a device including an MLSR radio in some embodiments. An overlapping base station set (OBSS) communication may refer to a communication transmitted or received by a device of a first basic service set detected by a device of a second basic service set in some embodiments. Simultaneous monitoring (e.g., of bands or links) may refer to a radio monitoring multiple bands or links such that an existence or a content of a wireless message on any of the bands or links can be detected, in some embodiments. Content of a message may refer to information in a body of a message, header of a message, preamble of a message, or the like in some embodiments.

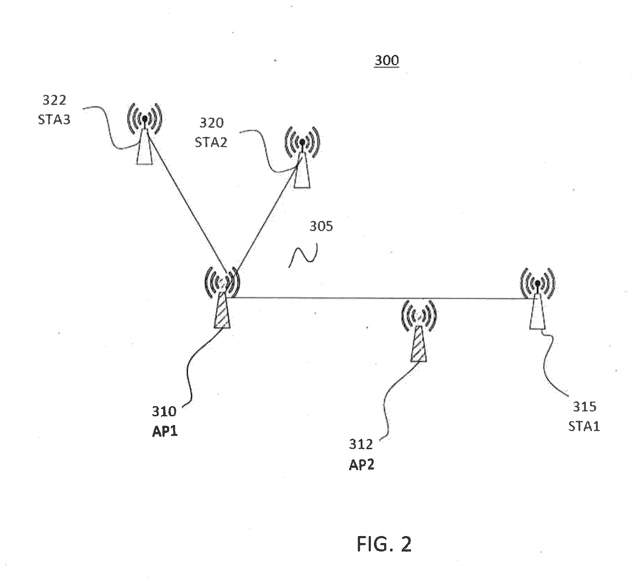

FIG. 2 is a network diagram 300 of a BSS 305, according to some embodiments. The BSS 305 can include an AP 310 (e.g., a mobile AP 310) and one or more STAs (e.g., non-APs). For example, the BSS 305 can include a first STA 315, a second STA 320, and a third STA 322. An AP 312 can also operate in the vicinity of BSS 305. The various devices of BSS 305 as well as AP 312 can detect OBSS communication of one or more OBSS according to a position, gain, or other characteristics thereof. For example, an AP 310 can detect OBSS communication from a first OBSS, or a first STA 315 can detect OBSS communication from a second OBSS. One or more sideband links can interconnect various devices of the BSS 305. For example, the sideband links can be a different wireless link on a same or different wireless band of a same wireless network (e.g., a 2.4 GHz band). In some embodiments, the various devices of BSS 305 are configured for CLS protocols as described below.

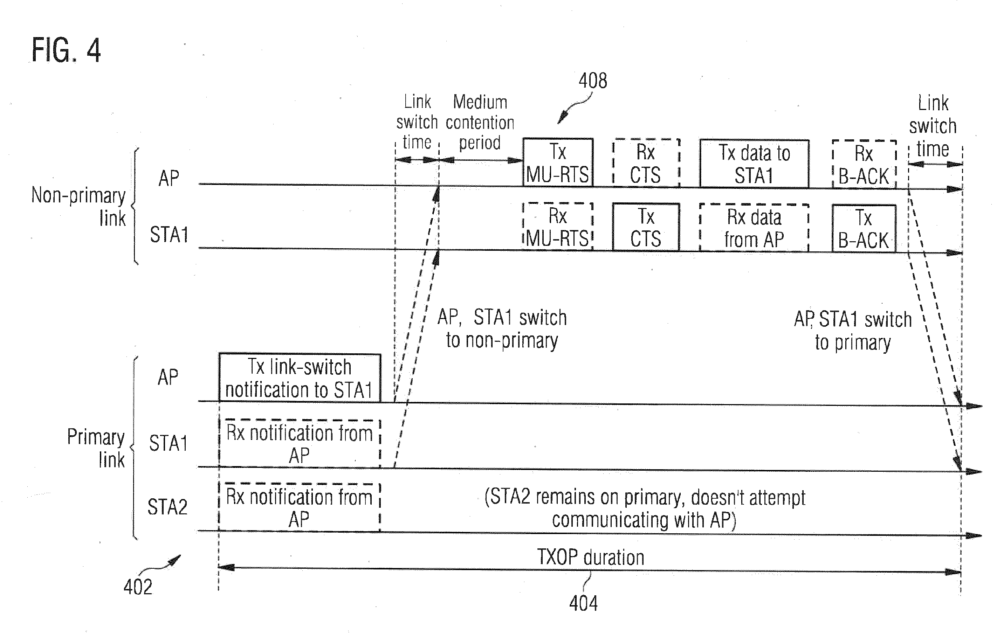

The first OBSS or the second OBSS can include various AP or STA devices. The OBSS communication can include uplink transmissions, downlink transmissions, broadcast messages, ad hoc messages, or the like. The BSS 305 can include a primary link and secondary link of a band of a wireless network. Hereinafter, in discussions with reference to FIGS. 4-8, various elements of FIG. 2 are referred to as an example of a wireless network for sequence diagrams. Such references are merely to provide an example embodiment, and are not limiting. For example, various networks can include additional, fewer, or different devices, sideband links, (e.g., wired or wireless links), etc. For example, some embodiments can employ sideband communication between the BSS 305 and various OBSS. Further, some OBSS can be detected by both the AP 310 and a STA 315, 320, and 322 in communication therewith. For example, the AP 310 and STA 315, 320, and 322 can transition to a secondary link and continue communication.

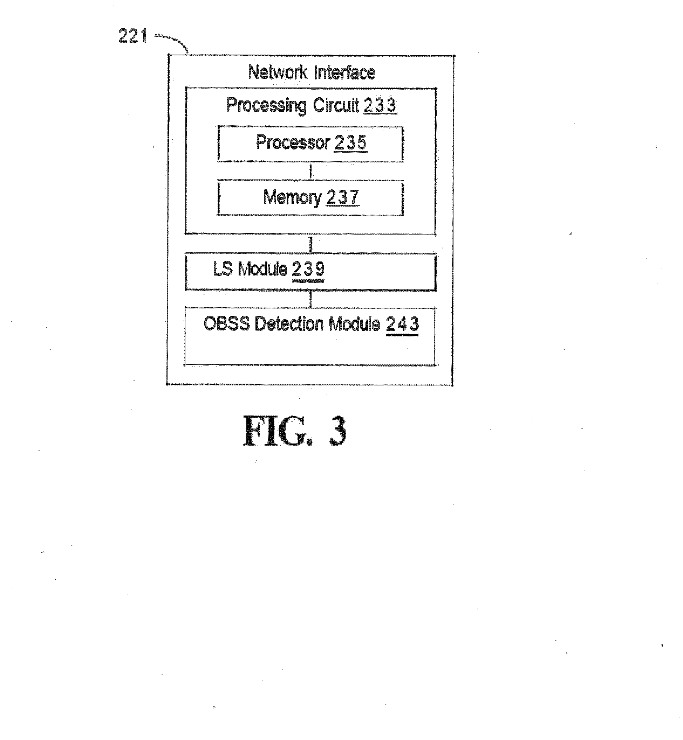

Referring to FIG. 3, a device 221 is an AP 310 or 312 or one of STAs 315, 320 and 322 (FIG. 2) and is configured for protocols and operations as described below according to some embodiments. In some embodiments, device 221 includes a processing circuit 233, a link-switch module 239, and a OBSS detection module 243. The processing circuit 233 is any circuitry or components that can perform logic and communication processing operations and can include a processor 235 and a memory 237 in some embodiments.

In some embodiments, the processing circuit 233 is implemented as a fieldprogrammable gate array, an application-specific integrated circuit, hardware, a software executing processor, or state machines. In some embodiments, the processing circuit 233 is part of layers (e.g., MAC, network, PHY layers) of IEEE 802.11 standard devices. The processing circuit 233 can be configured to perform communication operations, frame building and processing, discovery operations, association operations, authorization operations, connection setup, disassociation operations, handoff operations, OBSS detection operations, ILS operations, CLS operations, and deauthentication operations in some embodiments. Instructions for the processing circuit 233 are stored in a non-transitory medium such as memory 237 in some embodiments.

The memory 237 may be one or more devices (e.g., RAM, ROM, Flash memory, hard disk storage) for storing data and/or computer code for completing and/or facilitating the various processes described herein. The memory 237 may be or include non-transient volatile memory, non-volatile memory, and non-transitory computer storage media. Memory 237 may include database components, object code components, script components, or any other type of information structure for supporting the various activities and information structures described herein. Memory 237 may be communicably coupled to the processor 235 and include computer code or instructions for executing one or more processes described herein. The processor 235 may be implemented as one or more application specific integrated circuits (ASICs), field programmable gate arrays (FPGAs), a group of processing components, a software executing processor, state machines or other suitable electronic processing components. As such, AP or network device 106 (FIG. 1A) is configured to execute a variety of modules and/or programs and store associated data in a database of the memory 237. The modules (e.g., modules 239 and 243) can be implemented in AP software (e.g., MAC layer or PHY layer software) or STA software (e.g., MAC layer or PHY layer software). In some embodiments, the AP 310 or STA 315 (FIG. 2) is structured and used to establish connections and hand off access to other computing systems and devices (e.g., wireless communication device(s) 102, network hardware 192, other access points or network devices 106, ($FIGS. 1A-C) via a network (e.g., WAN connection, LAN connection, WLAN connection, etc.).

The link-switch module 239 and OBSS detection module 243 can be configured to provide OBSS detection and link-switch (e.g., CLS and ILS) operations. For example, in the network of network diagram 300 where AP 310 and its clients or STAs 315, 320, and 322 are on the primary link, which is time-shared with an OBSS. OBSS detection module 243 detects an OBSS frame and determines the duration of the OBSS TXOP. The link-switch module 239 switches the AP to the non-primary link if the measured received-signal-strength (RSSI) of the OBSS frame and the OBSS TXOP-duration both exceed some predetermined thresholds in some embodiments. Any clients or STAs of the AP that support EMLSR and can detect the same OBSS frame, determine the TXOP duration, and also switch to the non-primary link if the measured RSSI and TXOP-duration of the OBSS frame both exceed predetermined thresholds negotiated with the AP in some embodiments. The thresholds can be fixed, programmable, or adaptable. In some embodiments, the thresholds are set based upon medium characteristics. In some embodiments, the thresholds are set during association or initiation. In some embodiments, the thresholds are selected from an acceptable range of thresholds. In some embodiments, the AP and clients or STAs communicate over the non-primary link upon gaining medium-access, and switch back to the primary-link prior to the expiration of the OBSS TXOP. In some embodiments, the link-switch operation can happen without the detection of any OBSS frame (e.g., without requiring information on RSSI or TXOP duration of any OBSS frame). For instance, some CLS protocols can cause link-switch to be initiated without the detection of OBSS.

In some embodiments, the OBSS detection module 243 can be configured to operate according to one or more of rules for the detection of OBSS traffic (either defined by the standard, or per negotiation between the AP and clients) under an ILS protocol or a CLS protocol. The rules can include but are not limited to one or more of:
1. For OBSS frames in any physical protocol data unit (PPDU) (non-HT/HT/VHT/HE/EHT/EHT+) format such as: a.) OBSS detection occurs in response to the MAC header indicating a different BSS from which the AP and clients or STAs belong; and b.) OBSS detection occurs in response to any setting in the PHY preamble that the AP indicates is not supported by the BSS as a whole (i.e., supported by neither the AP nor the clients) (e.g., Nss or MCS or BW fields containing certain values for a given physical protocol data unit (PPDU) type (HT/VHT/HE/EHT/EHT+)), unsupported PHY version, etc. As a special case in some embodiments, this rule could be limited to any setting in the PHY preamble that the AP indicates is not supported by itself in both Tx and Rx (e.g., Nss or MCS exceeding the max supported by AP for Tx and Rx, etc.). EHT+ refers to any future 802.11 amendment defined after 802.11be that may include non-HT/HT/VHT/HE/EHT operation.
2. For OBSS frames in VHT-PPDU format: OBSS detection occurs in response to the partial- association identifier (AID) subfield of the VHT-SIGA field in the PHY preamble indicating a different BSS.
3. For OBSS frames in HE/EHT/EHT+ PPDU format: OBSS detection occurs in response to the BSS color subfield of the HE-SIGA field (for HE PPDU) or U-SIG field (for EHT/EHT+ PPDU) in the PHY preamble indicating a different BSS. If the AP detects a HE/EHT/EHT+ preamble with BSS color matching its own BSS color, but with the UL/DL field indicating a downlink (DL) PPDU, OBSS detection module 243 can interpret the PPDU to be OBSS.

In some embodiments, the OBSS detection module 243 can be configured to determine the OBSS TXOP-duration (either via the standard, or per negotiation between the AP and clients) using an ILS protocol. In some embodiments, the OBSS TXOP-duration is determined using certain information (e.g., in the OBSS frame) in some embodiments. The information can include but is not limited to: 1. the duration signaled in the Duration/ID field of the MAC header of the OBSS frame, 2. the Length subfield of the legacy-SIG (L-SIG) field in the PHY preamble of the received OBSS frame, 3. the TXOP duration signaled in the HE-SIGA field of the PHY preamble, for OBSS frames in HE PPDU format, and/or 4. the TXOP duration signaled in the U-SIG field of the PHY preamble, for OBSS frames in EHT/EHT+ PPDU format. On detecting an OBSS frame and determining the duration of the OBSS TXOP, the AP switches to the non-primary link if the measured received-signal-strength (RSSI) of the OBSS frame and the OBSS TXOP-duration both exceed some predetermined thresholds. Any clients of the AP that support EMLSR and can detect the same OBSS frame and determine its TXOP duration, also switch to the non-primary link, if the measured RSSI and TXOP-duration of the OBSS frame both exceed predetermined thresholds negotiated with the AP in some embodiments. The AP and clients communicate over the non-primary link upon gaining medium-access, and switch back to the primary-link prior to the expiration of the OBSS TXOP in some embodiments.

FIG. 4 is an exemplary sequence diagram for communication according to a first CLS protocol between AP 310 (e.g., a mobile AP in FIG. 2) and a STA1 315 (e.g., a non-AP) and STA2 325 all located on the primary link according to some embodiments. Upon gaining access to the medium on the primary link, the AP initiates a frame sequence 402 (including one or more frames) that advertises the AP's intended TXOP-duration and may additionally notify a subset of the AP's clients STA1 and STA2 to move to the non-primary link. The AP may also notify all of the AP's clients to not attempt any uplink transmissions on the primary for the TXOP duration 404. The frame sequence 402 may include, for example, one or more of the following: management frames (e.g., Action frames), A-control field within data frames, and/or control frames. Following the frame sequence 402, both the AP and notified clients or STAs in the subset of AP clients switch to the non-primary link to initiate the next TXOP. A frame sequence 408 can be provided on the non-primary link and include a transmit MU RTS frame, a receive MU RTS frame, a Receive CTS frame, a transmit RTS frame, data frames, a receive block acknowledge (B-ACK) frame and a B-ACK frame in some embodiments. The subset can include any number (e.g., 0 to N) or all of the STAs in the BSS, Any TXOP on the non-primary link is subject to medium-access protocols (e.g., non-primary medium-access after link-switch protocol described below). Any TXOP on the non-primary link may be initiated by the AP only (e.g., AP 310), or by the clients (e.g., STA1 315 and STA2 320) as well, subject to prior negotiation. The AP and all clients on the non-primary link-switch back to the primary link no later than the expiry of the TXOP-duration specified in by the AP the frame sequence in some embodiments. A non-primary link may refer to a link that is not the primary link (e.g., a secondary link) in some embodiments. In some embodiments, any client associated with the AP may gain access to the primary link before the AP does - in this case, the client may yield a portion or all of its TXOP to the AP for initiating the above frame sequence 402. The client or STA can transmit a frame that explicitly signals the TXOP being handed over to the AP to yield a portion or all of its TXOP.

The decision of when to switch back to primary link could be based on one or more of the following (either via negotiation/agreement prior to this TXOP, or via signaling during the TXOP): 1. A client that has moved to the non-primary link may need to remain on the non-primary until the expiry of the TXOP duration 404 signaled in frame sequence 402 minus the time it needs to complete the link-switch operation from non-primary to primary link; 2. If a client is in triggered-operation (MU-EDCA) mode on the non-primary link, and does not receive either a new frame addressed to it or a CTS frame addressed to the AP within a pre-specified duration from the end of the last such frame on the non-primary link, then it may switch back to the primary link; 3. If the AP or a client on the non-primary link finds the medium to be continuously busy/unavailable for their BSS for an amount of time exceeding a pre-specified threshold, then it may switch back to the primary link; and/or 4. The AP may explicitly notify the clients on non-primary link to switch back to the primary link prior to the expiry of the TXOP (e.g., if the AP determines that certain QoS metrics (such as data rate or latency) on the non-primary have fallen below a pre-determined threshold), in which case all devices need to switch back to primary.

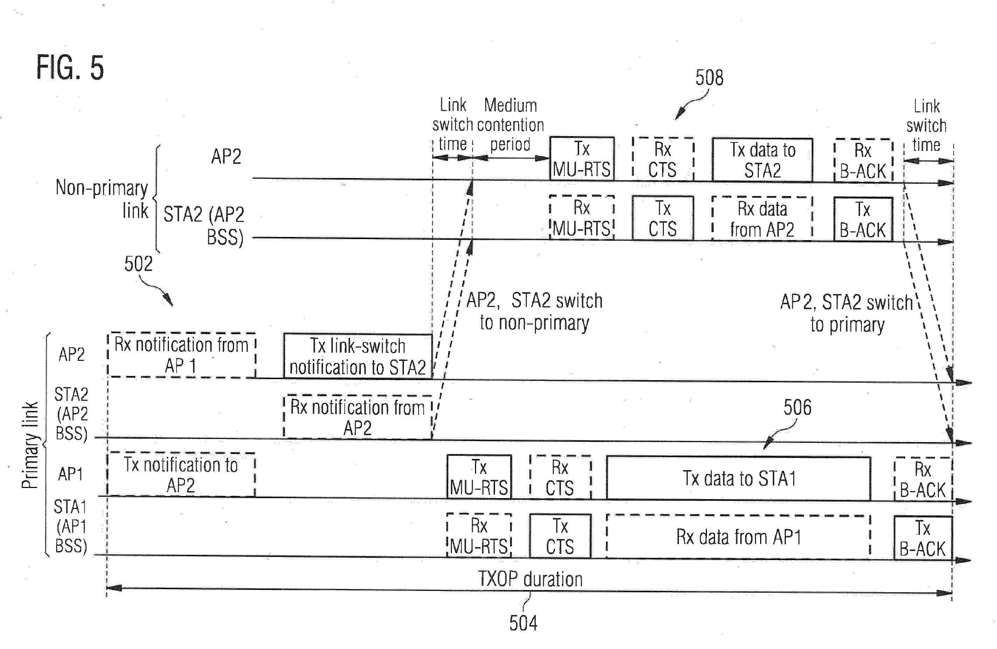

FIG. 5 is an exemplary sequence diagram for communication according to a second CLS protocol between AP1 310 and AP2 312 (FIG. 2) all located on the same primary link according to some embodiments. Upon gaining access to the medium on the primary link, AP1 initiates a frame exchange 502 with AP2 where AP1 signals its intended TXOP duration 504 (e.g., for a frame exchange 506) on the primary link and AP1 signals that it is granting the opportunity to AP2 to initiate the first CLS protocol (FIG. 4) described above for switching to the non-primary link. In response, AP2 re-broadcasts the remaining duration of AP1's TXOP on the primary link (e.g., frame exchange 504) and may additionally initiate the first CLS protocol (for a frame exchange 508) described above to switch to the non-primary for a TXOP duration no larger than that specified by AP1 above. The above frame exchanges 502, 506, and 508 may utilize, for example, one or more of the following: management frames (e.g., action frames), A-control fields within data frames, and/or control frames. Frame exchange 508 can be similar to sequence 408. Following the above frame exchange, AP1 uses the remainder of its TXOP to service its clients on the primary link in frame exchange 506. In some embodiments, any client associated with AP1 may gain access to the primary link before AP1 does. In this case, the client may yield a portion or all of its TXOP to AP1 to initiate the second CLS protocol (e.g., by transmitting a frame that explicitly signals the TXOP being handed over to AP1).

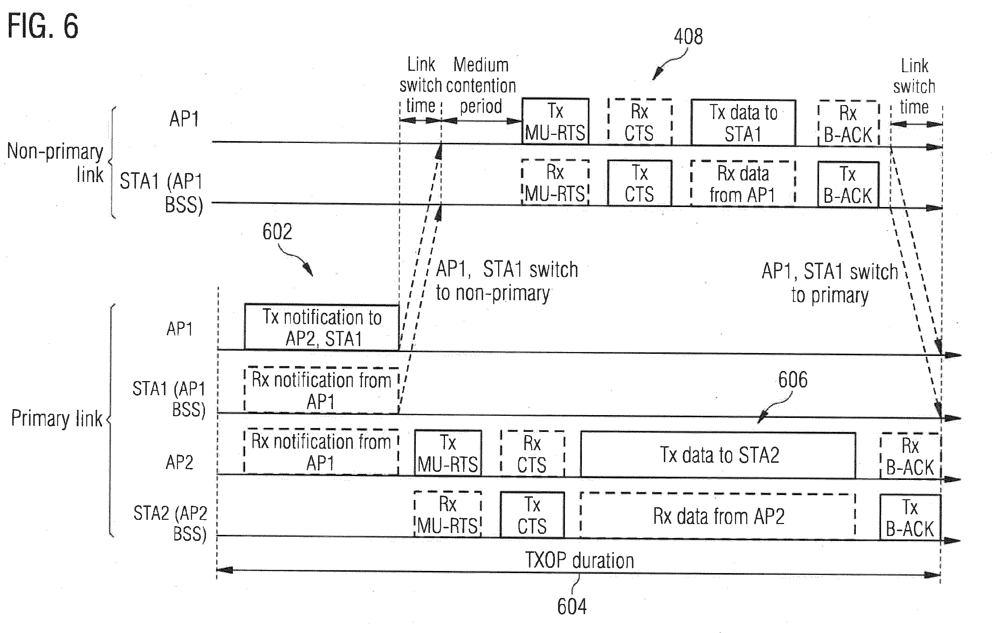

FIG. 6 is an exemplary sequence diagram for communication according to a third CLS protocol between AP1 310 and AP2 312 (FIG. 2) all located on the same primary link according to some embodiments. Upon gaining access to the medium on the primary link, AP1 initiates a frame sequence or exchange 602 that initiates the first CLS protocol (FIG. 4) to switch AP1 and a subset of its clients to the non-primary link for a frame exchange 408, and signals the total TXOP duration 604 for the primary link, which includes AP1's intended TXOP duration on the non-primary link. The frame sequence performs a TXOP handover to AP2, granting AP2 the opportunity to service its clients on the primary link, under one of the following conditions:
1. Condition 1: AP2 is allowed to utilize the primary link for a duration for frame exchange 606 not exceeding (i.e., smaller than or equal to) AP1's signaled TXOP-duration 604 above (this may require AP1 to re-acquire the medium on switching back to the primary link (e.g., by applying the second rule in the non-primary medium-access after link-switch protocol described below on the primary link); or
2. Condition 2: AP2 is required to utilize the primary link for a duration exactly matching AP1's signaled TXOP-duration 604 in the frame sequence (this allows AP1 to maintain medium-sync when it switches back to primary at the end of the TXOP).

The above frame sequences or exchanges 602, 606 and 608 may utilize, for example, one or more of the following: management frames (e.g., action frames), A-control fields within data frames, and/or control frames. In some embodiments, any client associated with AP1 that gains access to the primary link before AP1 does may yield a portion or all of its TXOP to AP1 for initiating frame sequence 602 (e.g., by transmitting a frame that explicitly signals the TXOP being handed over to AP1).

Following the above, AP2 services its clients on the primary-link (e.g., frame sequence or exchange 606), according to the specified conditions for TXOP handover. Under condition 1, AP2 ensures that the primary link is not occupied for longer than the remainder of the TXOP-duration signaled by AP1. Under condition 2, AP2 ensures that the primary-link is occupied for exactly the remainder of the TXOP-duration signaled by AP1.

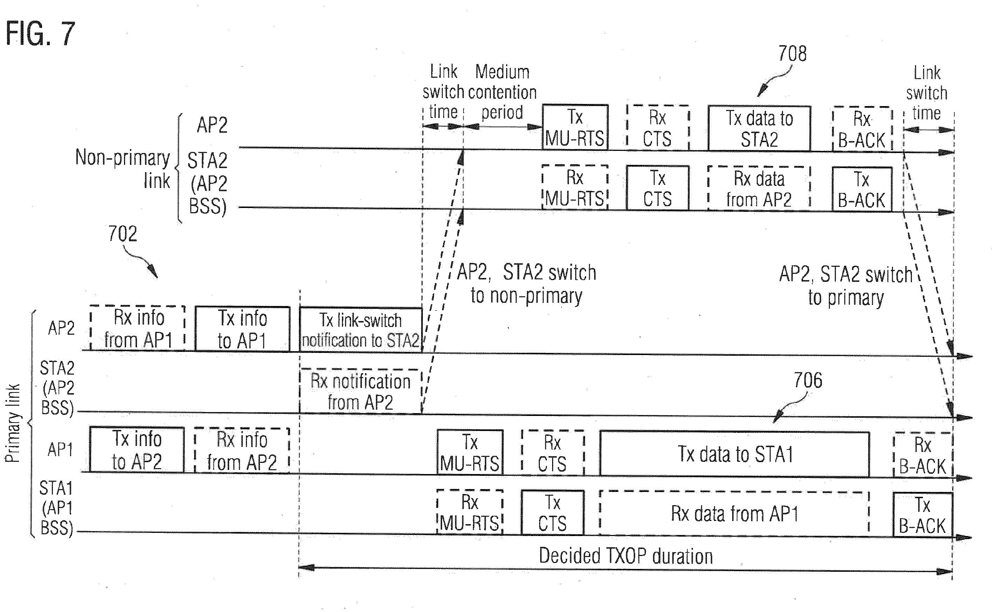

FIG. 7 is an exemplary sequence diagram for communication according to a fourth CLS protocol between AP1 310 and AP2 312 belonging to two different BSS (FIG. 2) and all located on the same primary link according to some embodiments. AP1 wins medium-access on the primary-link and initiates a frame exchange 702 with AP2, during which the AP1 and AP2 may exchange information on different parameters in some embodiments. The parameters can include but are not limited to 1. parameters that indicate whether the clients to be serviced by each AP in the following TXOP support link-switch, 2. each AP's CCA status on their respective non-primary links, and/or 3. each AP's intended TXOP-durations for the following TXOP, for either case: (a) if it remains on the primary link, or (b) if it switches to the non-primary, metrics that determine each AP's anticipated improvement in its Quality-of-service (QoS) for the following TXOP gained by switching to the non-primary link vs remaining on the primary (e.g., of such metrics: throughput gain, latency reduction).

The information exchanged above is used by AP1 and AP2 to decide which AP may switch to the non-primary for the ensuing TXOP, as well as the duration of ensuing TXOP. The decision is based on rules that are either agreed upon in frame exchanges prior to the TXOP, or configured for both APs by a network-management entity in some embodiments. Examples of rules are one or more of the following rules:
i. Rule 1: if AP1 intends to service clients that support link-switch operations while AP2 intends to service clients that do not, then AP2 remains on the primary link while AP 1 switches to the non-primary link.
ii. Rule 2: if CCA status of AP1 indicates that the non-primary link is idle/unoccupied while the CCA status of AP2 indicates that the non-primary link is busy, then AP1 switches to the non-primary link while AP2 remains on the primary link.
iii. Rule 3: if AP1 anticipates a larger improvement in its QoS by switching to the non-primary link than AP2, then AP2 remains on the primary link while AP1 switches to the non-primary link.
iv. Rule 4: If AP1 remains on the primary link for an exchange 706 and AP2 switches to non-primary link for the ensuing TXOP for an exchange 708, then the actual TXOP duration is chosen based on the smaller of: (A) API's intended TXOP duration on the primary link, and (B) AP2's intended TXOP duration on the non-primary link plus any link-switch or other delays associated with AP2 and its STAs switching to the non-primary link and back..

The frame exchanges 702, 704, and 708 may be performed using, for example, one or more of the following: management frames (e.g., action frames), A-control field within data frames, and/or control frames. Following the frame exchange, if AP1 was selected for a link-switch operation, then AP1 initiates the third CLS protocol (e.g., as in FIG. 6) to switch to the non-primary link for the negotiated-duration, performing a TXOP handover of the primary link to AP2 which services its clients on the primary link, according to the rules specified in the third CLS protocol. Following the frame exchange, if AP2 was selected for a link-switch operation, then either AP1 initiates the second CLS protocol to provide AP2 the opportunity to switch to the non-primary link for the decided-duration, while AP 1 services its clients on the primary link, or AP2 initiates the first CLS protocol directly to switch to the non-primary link for the decided-duration, following which AP1 services its clients on the primary link. If neither AP1 nor AP2 was selected for the link-switch operation, then AP1 utilizes the remainder of its TXOP to service its clients on the primary link. In some embodiments, any client associated with AP 1 may gain access to the primary link before AP1 may yield a portion or all of its TXOP to the AP2 to initiate the fourth CLS protocol (e.g., by transmitting a frame that explicitly signals the TXOP being handed over to AP2).

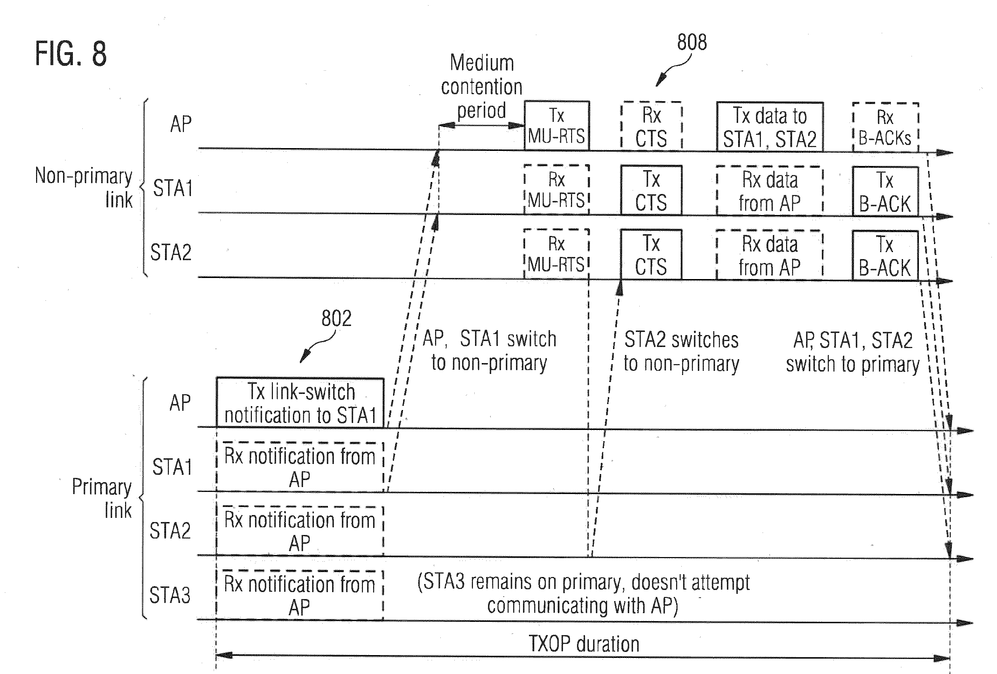

FIG. 8 is an exemplary sequence diagram for communication according to a fifth CLS protocol between AP1 (e.g., a mobile AP in FIG. 2) and a STA1 315 (e.g., a non-AP), STA2 325, and STA 322 according to some embodiments. AP1 is on the non-primary link, having switched there via an ILS operation or according to one of the first through fourth CLS protocols for a frame exchange 808. One or more clients or STAs has listen-only capability (e.g., capability to receive and decode non-HT frames only, and without any Tx capability, also defined in 802.11be for EMLSR non-AP STA) on the non-primary link. The AP transmits a trigger (MU-RTS or other frame) on the non-primary link, addressed to at least one client with listen-only capability on the non-primary link. On receiving the trigger, the client with listen-only capability switches over to full Rx/Tx capability on the non-primary link. The AP may include padding in the transmitted trigger to accommodate the client's link-switching delay. STA3 or STA 322 may remain on the primary link and does not switch to the non-primary link for exchange 808 depending on its capabilities in some embodiments.

In some embodiments, a non-primary medium-access after link-switch protocol (as referred to above) can be used in a scenario where an AP and a subset of associated clients have switched to a non-primary link, via an ILS operation or according to one of the first through fifth CLS protocols. One or more rules can be enforced for medium-access on the non-primary link, either by the standard or by prior-handshake/negotiation between AP and clients. The one or more rules include but are not limited to:
1. The clients or STAs may be limited to transmitting only when granted the opportunity to do so by the AP (e.g., in response to a frame from the AP). For example, the STAs may be disallowed from initiating a TXOP by themselves. This limitation may be indicated during the announcement of the switch to the non-primary link (e.g., in exchange 802), or by prior negotiation (e.g., when the clients associate to the AP, or by a subsequent change in the operating mode as indicated by the AP or the clients) in some embodiments.
2. If the AP was not aware of the status of the medium on the non-primary link prior to switching to that link, then the AP performs the following to initiate a TXOP on the non-primary link:
   a. The AP first measures the on-air energy on the non-primary link, and checks if it is below a pre-specified threshold.
   b. If this check is satisfied, the AP then transmits a single MU-RTS, or other short frame which elicits a response, and waits for a response from one or more clients prior to further transmit/receive activity on the non-primary link.
   c. A client may transmit to the AP on the non-primary link only if one of the following conditions is satisfied:
      i. The client is aware of prior medium-status (e.g., via detecting preceding frames) and is therefore able to determine that the medium is currently idle (e.g., using the same CCA mechanism as employed on the primary link).
      ii. The client is not aware of the prior medium status, but has measured the current on-air energy and performed a check to ensure that the measured energy falls below a pre-specified threshold (possibly different from that used by the AP).

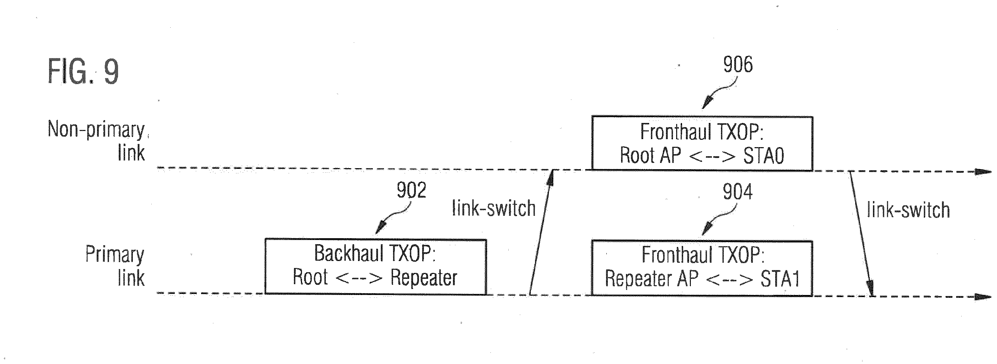

FIG. 9 is an exemplary sequence diagram for CLS for residential mesh networks according to some embodiments. In some embodiments, a residential mesh network has a single root-AP connected to the ISP/wide-area network and one or more repeater-APs connected to the root-AP via a backhaul link that is generally wireless. The root and repeater APs can be multiband (e.g., support multiple radio links in parallel on different channels/frequency bands) and can be co-located on the same set of channels for both backhaul 902 and fronthaul 904 (e.g., on the primary link). The same channel can be time-shared between fronthaul 904 and backhaul 902 (e.g., under WiFi7/802.11be) and can leverage higher data-rates due to simultaneous transmit-receive (STR) multi-link operation (MLO) on the backhaul. In some embodiment, CLS operations enable higher throughputs/lower latencies versus default mesh operation, as follows:
1. The primary links of each radio on the root and repeater APs are co-located on the same channel-frequency.
2. Both root and repeater APs remain on the primary links of each radio during backhaul operation (i.e., when data is transferred from root to repeater AP or vice versa).
3. For fronthaul on each radio, the root and repeater APs coordinate (e.g., via one of the outlined CLS protocols ) such that one of the APs continues to service its clients on the primary link (e.g., fronthaul 904) while the other AP switches to the non-primary link along with its clients for fronthaul 906.
4. Furthermore, since the root AP is aware of the active traffic flows to/from STAs associated to itself as well as to the repeater AP, it can pick a CLS protocol with minimum overhead. For example, if there is active traffic for STAs capable of link-switch operations and connected to the root AP, as well as for STAs incapable of link-switch operations and connected to the repeater, then the root AP may initiate the third CLS protocol on gaining medium-access to the primary link.

In some embodiments, the first CLS protocol (FIG. 4) or the fifth CLS protocol (FIG. 8) is used with dual- band APs to provide higher throughputs. The dual-band APs have two fully capable radios. The first radio services clients in the 2.4 GHz band, while the second services clients in 5-6 GHz band. However, without a third full-radio, these APs are often unable to exploit the wider channel bandwidths and lower congestion of the newly available 6-7 GHz spectrum in certain locales. In some embodiments, the first CLS protocol or the fifth CLS protocol (FIG. 8) enables dual-band APs to temporarily switch to a non-primary link in the 6-7 GHz band to service clients that are capable of 6 GHz operation via EMLSR link-switch, thereby allowing for higher throughputs/lower latencies than permitted by operation in the more congested 5-6 GHz band. In some embodiments, a fronthaul operation or phase may refer to communication or transfer of data between an AP and a client device associated with that AP. In some embodiments, a backhaul phase or operation may refer to communication or transfer of data between a first AP and a second AP (such as data intended for, or originating from, a client device associated with one of the AP.

Embodiments of the apparatuses and processes thus generally described above, may be better understood by reference to the IEEE 802.11 standards, which provides additional details on certain signals and operations disclosed herein, and is not intended to be limiting of the apparatuses or processes described above in any manner. (IEEE) standards which are hereby incorporated in full into the present disclosure (particularly, 802.11-2020; 802.11ax^{™}-2021 IEEE Std 802.11ax^{™}-2021: Enhancements for High Efficiency WLAN (Amendment 1), IEEE P802.11be^{™}/D2.2, and IEEE P802.11-REVme^{™}/D1.3). In some embodiments, a WiFi network may refer to wireless network that has Internet access.

Circuitry or circuit may refer to any electronic circuit or combination of circuits. To the extent that a device, circuit, processor or circuitry is described or recited in a claims as performing one or more operations or functions or as configured to perform to one or more operations or functions, the performance of the recited function(s) or operation(s) can be distributed across two or more devices, circuits, or processors without departing from the scope of the claims unless those functions or operations are explicitly recited as being performed on a specific single circuit or set of circuits, processor, or device (e.g. using the phrase "on a single circuit", "on the set of circuits comprising" or "on a single device").

It should be noted that certain passages of this disclosure can reference terms such as "first" and "second" in connection with subsets of transmit spatial streams, sounding frames, response, and devices, for purposes of identifying or differentiating one from another or from others. In some embodiments, when the first device and second device are access points, the second link of the first device could be different from the second link of the second device (e.g., the second links may occupy different channel frequencies, may partially overlap in frequency, may be of different bandwidths). These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A first device, comprising:
a circuit configured to provide frames across a connection comprised of one or more links to a second device, the first device and the second device being access points, wherein the circuit is configured to provide a transmit opportunity duration on a first link and an opportunity for the second device to switch to a second link.

2. The first device of claim 1, wherein the circuit is configured to perform one or more of: 1. keep the first device on the first link if the second device services clients that support link switch while the first device services clients that do not support link switch; 2. switch the first device to the second link if a clear channel assessment status of the first device indicates that the second link is idle/unoccupied and the clear channel assessment status of the second device indicates that the second link is busy; or 3. switch the first device to the second link if the first device anticipates a larger improvement in quality of service for the first device by switching to the second link than the second device.

3. The first device of claim 1 or 2, wherein the circuit is configured to transmit a trigger on the second link after the first device has switched to the second link, the trigger being addressed to at least one client device with listen-only capability on the second link, and the trigger causing the at least one client device to switch to full receive and transmit capability on the second link.

4. The first device of any of claims 1 to 3, wherein the circuit is configured to provide frames across a connection to a third device, wherein the circuit is configured to detect a first frame on the first link from an overlapping basic service set and determine a second transmit opportunity duration for the overlapping basic service set, wherein the circuit is configured to switch the first device to the second link or a third link if a received-signal-strength of the first frame exceeds a first threshold and the second transmit opportunity duration exceeds a second threshold.

5. The first device of any preceding claim, wherein the frames are provided according to an 802.11 protocol.

6. The first device of claim 4 or 5, wherein the circuit is configured to receive a second frame from the third device or to transmit a third frame to the third device, on the second link or third link, during the second transmit opportunity duration.

7. The first device of any preceding claim 4 to 6, wherein the circuit is configured to switch the first device back to the first link no later than expiry of the second transmit opportunity duration.

8. The first device of any preceding claim, wherein the second device is configured to operate on the first link according to a rule associated with the transmit opportunity duration.

9. The first device of any preceding claim, wherein the first device and the second device are configured to operate on the first link for a backhaul phase and one of the first device or the second device is configured to operate on the second link during a fronthaul phase.

10. A first device, comprising:
a circuit configured to provide frames across a connection comprised of one or more links to a second device, wherein the circuit is configured to detect a first frame on a first link from an overlapping basic service set and determine a first duration of a transmit opportunity for the overlapping basic service set, wherein the circuit is configured to perform one or more of 1. switch the first device to a second link and the first device remains on the second link until expiry of the duration minus a time for completion of a link-switch operation from second link to the first link; 2. switch the first device to the second link and the first device remains on the second link until expiration of a second duration if a new frame addressed to the first device or a clear to send frame addressed to the second device is received within a third duration; 3. switch the first device back to the first link after switching to the second link if the second link is continuously busy/unavailable for a fourth duration; 4. switch the first device back to the first link after switching to the second link if the second device notifies the first device to switch back to the first link prior to the expiry of the first duration; or 5. switch the first device to a second link if a measured received-signal-strength (RSSI) of the first frame exceeds a first threshold and the first duration exceeds a second threshold.

11. The first device of claim 10, wherein the second device is an access point.

12. The first device of claim 10 or 11, wherein the first frame is detected as being from an overlapping service set using a setting in a physical layer preamble.

13. The first device of claim 12, wherein the first device is an access point and the setting is a number of splits, a modulation coding scheme or a bandwidth or physical-layer version setting that is not supported by the first device.

14. The first device of any preceding claim 10 to 13, wherein the first device is an access point and the first frame is detected as being from an overlapping service set in response to data in an uplink/ downlink field.

15. A first device, comprising:
a circuit configured to provide frames across a connection comprised of one or more links to a second device and a third device, the first device being an access point and the second device and the third device being client devices, wherein the circuit is configured to initiate a frame sequence upon gaining access to a medium on a first link, the frame sequence providing a transmit opportunity duration, wherein the circuit is configured to switch the first device to a second link following the frame sequence and switch the first device back to the first link no later than expiry of the transmit opportunity duration.
